# EUROPÄISCHE PATENTSCHRIFT

(11) **EP 2 981 503 B1**
(45) Veröffentlichungstag und Bekanntmachung des Hinweises auf die Patenterteilung: **29.04.2020**
(21) Anmeldenummer: 14728418.6
(22) Anmeldetag: 01.04.2014
(51) Int. Cl.: C01B 13/02

(54) **VERFAHREN UND MEMBRANMODUL ZUR ENERGIEEFFIZIENTEN SAUERSTOFFERZEUGUNG IN DER BIOMASSEVERGASUNG**
METHOD AND MEMBRANE MODULE FOR THE ENERGY-EFFICIENT OXYGEN GENERATION DURING BIOMASS GASIFICATION
PROCÉDÉ ET MODULE MEMBRANAIRE POUR PRODUIRE DE L'OXYGÈNE DE MANIÈRE ÉCO-ÉNERGÉTIQUE AU COURS DE LA GAZÉIFICATION DE LA BIOMASSE

(30) Priorität: 05.04.2013 DE 102013103426
(43) Veröffentlichungstag der Anmeldung: 10.02.2016
(73) Patentinhaber: Fraunhofer-Gesellschaft zur Förderung der angewandten Forschung e.V., 80686 München (DE)
(72) Erfinder: KRIEGEL, Ralf, 07768 Kahla (DE)
(74) Vertreter: Oehmke, Volker
(86) Internationale Anmeldenummer: PCT/DE2014/100111
(87) Internationale Veröffentlichungsnummer: WO 2014/161531

(56) Entgegenhaltungen:
- EP-A2- 0 984 500
- WO-A1-01/13453
- US-A- 6 139 604
- US-A1- 2002 127 177
- US-A1- 2005 037 299
- HASHIM S S ET AL: "Oxygen separation from air using ceramic-based membrane technology for sustainable fuel production and power generation", RENEWABLE AND SUSTAINABLE ENERGY REVIEWS, ELSEVIERS SCIENCE, NEW YORK, NY, US, Bd. 15, Nr. 2, 1. Februar 2011 (2011-02-01), Seiten 1284-1293, XP027582285, ISSN: 1364-0321 [gefunden am 2010-12-31]

## Beschreibung

Die Erfindung betrifft ein Verfahren und ein Membranmodul zur prozessintegrierten Sauerstofferzeugung bei der Biomassevergasung, wobei der Sauerstoff über gemischt leitende keramische Membranen bei hoher Temperatur erzeugt wird.

Die Biomassevergasung mit Luft liefert ein stickstoffhaltiges Synthesegas, dessen Heizwert in der Regel nicht mehr als 1,8 kWh je m³ i.N. (im Normzustand, nach DIN 1343) beträgt. Dieser Wert ist auch bei Verwendung idealer Rohstoffqualitäten, z. B. trockener Buchenholz-Hackschnitzel, nicht zu übertreffen. Die für Synthese- und Mischgase entwickelten Gasmotoren erreichen mit derartigen Schwachgasen nur geringe elektrische Wirkungsgrade, so dass eine Stromerzeugung damit nicht wettbewerbsfähig ist. Zur Erhöhung des Heizwertes können Gase mit höherem Heizwert zugemischt werden, z. B. Biomethan oder Erdgas, was jedoch die Brennstoffkosten deutlich erhöht. Als Alternative zur Vergasung mit Luft werden deshalb größere Vergasungsanlagen mit Sauerstoff betrieben, dem aufgrund der resultierenden hohen Vergasungstemperaturen häufig Dampf zur Kühlung zugemischt wird (WO 2008/068596 A2).

Das Synthesegas aus der Biomassevergasung enthält je nach dem verwendeten Vergasertyp unterschiedliche Anteile an Teer, die vor der Nutzung im Blockheizkraftwerk, in dieser Schrift durchgängig mit "BHKW" bezeichnet, entfernt werden müssen. Eine sichere Methode zur Teerentfernung ist die Nacherhitzung des Synthesegases auf ca. 1200 °C, was relativ einfach durch Zugabe von Sauerstoff ins heiße Synthesegas erreicht werden kann. Darüber hinaus kann Sauerstoff auch eingesetzt werden, um die elektrische Leistung von Gasmotoren oder Brennstoffzellen zu erhöhen, indem z. B. der Sauerstoffgehalt der zugeführten Verbrennungsluft erhöht wird.

Die konventionelle Produktion von Sauerstoff erfolgt bevorzugt durch Druckwechseladsorption (PSA - Pressure Swing Adsorption) oder durch kryogene Luftzerlegung (Linde®-Verfahren). Energetisch optimierte Großanlagen erreichen spezifische Energieverbräuche von minimal 0,4 kWh_{el.}/ m³ i.N. O₂ (kryogen) bzw. 0,36 kWh_{el.}/ m³ i.N. O₂ (PSA). Die Biomassevergasung benötigt jedoch nur vergleichsweise geringe Sauerstoffmengen, die üblicherweise durch kleinere PSA-Anlagen bereitgestellt werden. Diese PSA-Anlagen benötigen deutlich mehr als 1,0 kWh_{el.}/ m³ i.N. O₂ und schmälern damit durch ihren Eigenbedarf an elektrischer Energie erheblich den wirtschaftlichen Ertrag der Vergasungsanlage bzw. machen diese unwirtschaftlich. Die Verwendung von Sauerstoff aus Flaschen oder Flüssigtanks bringt erhebliche Aufwendungen für Miete und Transport mit sich und hat sich deshalb bisher ebenfalls nicht durchgesetzt.

Eine alternative Methode zur Herstellung von Sauerstoff basiert auf einem Membrantrennprozess bei hohen Temperaturen. Dafür werden gemischt leitende keramische Membranen (MIEC - Mixed Ionic Electronic Conductor) eingesetzt, die eine hochselektive Abtrennung von Sauerstoff ermöglichen. Der Sauerstofftransport beruht auf dem Transport von Oxidionen durch das gasdichte keramische Material und dem parallel stattfindenden Transport elektronischer Ladungsträger (Elektronen oder Defektelektronen). Seit den 1980er Jahren wurde eine Vielzahl keramischer Materialien hinsichtlich des Sauerstofftransports und weiterer Materialeigenschaften untersucht (Sunarso, J., Baumann, S, Serra, J.M., Meulenberg, W.A., Liu, S., Lin, Y.S., Diniz da Costa, J.C.: Mixed ionic-electronic conducting (MIEC) ceramic-based membranes for oxygen separation. J. of Membrane Sc. 320 (2008), 13 - 41).

Die Sauerstoffpermeation durch eine MIEC-Membran kann durch die Wagner'sche Gleichung beschrieben werden und ist vor allem durch die ambipolare Leitfähigkeit des Materials bei Einsatztemperatur, die Membrandicke und durch die Triebkraft bestimmt. Letztere ergibt sich aus dem logarithmischen Verhältnis des Sauerstoffpartialdrucks im Feedgas (pₕ) zu dem Sauerstoffpartialdruck im Spülgas (pₗ) oder im Permeat. Der Sauerstofffluss durch eine MIEC-Membran ist demnach bei gegebenem Material, konstanter Membrandicke und festgelegter Temperatur proportional zu In(pₕ/pₗ). Dementsprechend hat eine Verdopplung von pₕ auf der Feedgasseite die gleiche Erhöhung des Sauerstoffflusses zur Folge wie eine Halbierung von pₗ auf der Permeat- oder Sweepgasseite. Zur Erzeugung reinen Sauerstoffs in technischen Membrananlagen kann dementsprechend die Luft verdichtet oder der Sauerstoff mit Vakuum abgesaugt werden, natürlich sind auch kombinierte Prozesse möglich (Armstrong, P.A., Bennett, D.L., Foster, E.P., Stein, V.E.: The New Oxygen Supply for the New IGCC Market. Gasification Techn. 2005, San Francisco, 9.-12.10.2005). Für großtechnische Anlagen wird die Verdichtung der Luft bevorzugt (US 6,139,604), da Kompressoren im Allgemeinen billiger und besser verfügbar sind als Vakuumerzeuger.

Im Membrantrennprozess kann der Restsauerstoffgehalt der Sauerstoffabgereicherten Abluft noch genutzt werden, um die MIEC-Membranen und den Abluftstrom zu beheizen (US 2005/0037299 A1). Da die bisher vorgeschlagenen Anordnungen durchweg einen direkten Kontakt der Membran zum Rauchgas durch Konvektion und Diffusion in der Gasphase ermöglichen, sind die vorgeschlagenen Anordnungen jedoch nur für CO₂-stabile MIEC-Membranen geeignet. Diese weisen typischerweise nur sehr geringe Sauerstoffdurchsätze auf, führen zum Einsatz großer Membranflächen, großen Reaktoren und hohen Kosten. Sie sind für die kleinskalige Sauerstoffproduktion deshalb nicht geeignet.

Wird der erzeugte Sauerstoff für chemische Reaktionen benötigt, so kann die Triebkraft energetisch am günstigsten durch die Spülung der MIEC-Membran mit sauerstoffarmen Gasen erzeugt werden. Der Oxycoal-AC-Prozess (http://www.oxycoal-ac.de/index.php?id=1099&L=0) für ein Kohlekraftwerk, d. h. die Verbrennung von Kohle in einem CO₂/O₂-Gemisch, verwendet deshalb das rezirkulierte Rauchgas als Spülgas an der MIEC-Membran, da dieses lediglich Sauerstoffgehalte von 1 - 3 Vol-% aufweist. Um den Sauerstofffluss durch die Membran zu steigern, wird auf der Feedgasseite die Luft komprimiert und nach dem Membranmodul die Kompressionsenergie durch eine Entspannungsturbine zu einem Großteil zurückgewonnen. Die Minimierung der Energieverluste erfordert dabei einen hohen Wirkungsgrad von Verdichter und Turbine. Außerdem ist zur Realisierung eines günstigen Belastungszustandes der keramischen Membrankomponenten ein äußerer Druckkessel erforderlich.

Die gegenwärtig verfügbaren MIEC-Membranmaterialien mit hoher Sauerstoffpermeation sind unter CO₂ nicht stabil, da die enthaltenen Erdalkalien mit dem CO₂ Carbonate bilden und die Membranoberfläche blockieren (Schulz, M., Kriegel, R., Kämpfer, A.: Assessment of CO2-stability and oxygen flux of oxygen permeable membranes. J. Membr. Sc. 378 (2011), S. 10-17). Deshalb werden alternativ zum Oxycoal-AC-Prozess mit CO₂-Sweep, der auch als 4-End-Verfahren bezeichnet wird, Prozesse ohne Sweepgas entwickelt. Diese werden als Dead-End oder 3-End-Verfahren bezeichnet. Dabei wird, wie bereits ausgeführt, durch Erzeugen von Druckunterschieden reiner Sauerstoff erzeugt.

Im Bereich der Energieerzeugung beanspruchen mehrere Patente den Einsatz von MIEC-Membranen für die Oxyfuel-Verbrennung im Kohlekraftwerk (Hashim, S.S. et al: "Oxygen seperation from air using ceramic-based membrane technology for sustainable fuel produktion and power generation", Renwable and Sustainable Energy Reviews, ELSEVIERS SCIENCE, New York, NY, US, Bd. 15, Nr.2, 1. Februar 2011, Seiten 1284-1293, XP027582285, ISSN: 1364-0321) mit dem Ziel der CO₂-Abtrennung (WO 2009/065374 A3, EP 2 026 004 A1). Verschiedene Verfahrensschemata zielen vor allem darauf ab, die zu erwartenden Wirkungsgradeinbußen möglichst zu minimieren. In WO 2009/065374 A3 wird im Gegensatz zu den meist präferierten Überdruckprozessen Vakuum auf der Permeatseite angelegt. Dies ermöglicht ein Membranmodul ohne hochtemperaturfesten äußeren Druckkessel und erfordert geringere Kompressionsenergie, da nur der Sauerstoff auf der Permeatseite der Membran verdichtet werden muss. Nachteilig ist, dass die Kompressionsenergie dem Gesamtprozess verloren geht.

Die Erzeugung von Sauerstoff über MIEC-Membranen und dessen Einsatz im Vergasungskraftwerk beanspruchen WO 2008/014481 A1 und EP 2 067 937 A2. In beiden Patenten wird die ins Membranmodul eintretende Luft verdichtet und die Kompressionsenergie durch Entspannungsturbinen zurückgewonnen.

Für die Biomassevergasung ist der Einsatz von MIEC-Membranen zur Sauerstoff-Erzeugung nur dann sinnvoll, wenn der Energieverbrauch typischer PSA-Anlagen deutlich unterschritten werden kann. Der Eigenenergiebedarf der MIEC-Membrantrennung resultiert einerseits aus der Wärmeenergie, die zur Aufrechterhaltung der hohen Temperatur von 800 - 900 °C an der Membran erforderlich ist. Andererseits wird zur Erzeugung der Triebkraft für den Sauerstofftransport Kompressionsenergie zur Gasverdichtung benötigt. Erschwerend für die wärmetechnische Integration wirkt sich aus, dass bisher bekannte MIEC-Membranmaterialien mit hohem Sauerstofffluss meist nur in einem eingeschränkten Temperaturbereich einsetzbar sind. So tendiert das häufig eingesetzte Material BSCF unterhalb von ca. 830 °C zu einem langsamen Phasenzerfall, der zu einem Nachlassen der Sauerstoffpermeation führt (Shao, Z., Yang, W., Cong, Y., Dong, H., Tong, J., Xiong, G.: Investigation of the permeation behavior and stability of a Ba0.5Sr0.5Co0.8Fe0.2O3-δ oxygen membrane. J. of Membr. Sc. 172 (2000), S. 177-188). Mit steigender Temperatur nimmt außerdem die Kriechrate des Materials zu, so dass es aufgrund der anliegenden Druckunterschiede an der Membran zum mechanischen Versagen der Membrankomponenten kommen kann (Pecanac, G., Baumann, S., Malzbender, J.: Mechanical properties and lifetime predictions for Ba0.5Sr0.5Co0.8Fe0.2O3-δ membrane material, J. of Membr. Sc. 385- 386 (2011), S. 263- 268). Ein direkter Kontakt mit Synthesegas führt darüber hinaus zu starker Korrosion (Lu, H., Tong, J., Cong, Y., Yang, W.: Partial oxidation of methane in Ba0.5Sr0.5Co0.8Fe0.2O3-δ membrane reactor at high pressures. Catalysis Today 104 (2005), S. 154-159) und u. U. zum Bruch der Membranen. Eine direkte Beheizung der Membranen mit Verbrennungsgasen erscheint ebenfalls nicht möglich, da der CO₂-Gehalt im Rauchgas zur Bedeckung der Membran mit Erdalkalicarbonaten und zur Blockade der Sauerstoffpermeation führt (Arnold, M., Wang, H., Feldhoff, A.: Influence of CO2 on the oxygen permeation performance and the microstructure of perovskite-type (Ba0.5Sr0.5)(Co0.8Fe0.2)O3-δ membranes. J. of Membr. Sc. 293 (2007), S. 44-52).

Die aufgeführten nachteiligen Eigenschaften bzw. die eingeschränkten Einsatzbedingungen hochentwickelter MIEC-Membranmaterialien führen somit zu erheblichen Einschränkungen bei der technischen Realisierung eines prozessintegrierten Membranmoduls zur Sauerstofferzeugung. Es verbleibt lediglich die Möglichkeit, die ins Membranmodul eintretenden Gasströme entsprechend genau zu temperieren oder das Membranmodul mit elektrischen Zusatzheizungen zu versehen, um den Betrieb im optimalen Temperaturbereich sicherzustellen und einen Kontakt mit korrosiv wirkenden Gasen zu vermeiden. Dies würde jedoch zu aufwändigen, hochkomplexen Anlagensteuerungen oder zu einem hohen zusätzlichen Verbrauch elektrischer Energie führen.

Der Erfindung liegt die Aufgabe zugrunde, eine Möglichkeit zur energieeffizienten Sauerstofferzeugung in der Biomassevergasung zur Effizienzsteigerung des Gesamtprozesses anzugeben.

Erfindungsgemäß werden die aufgeführten Nachteile des Standes der Technik dadurch gelöst, dass ein Membranmodul direkt mit dem Synthesegas aus der Biomassevergasung beheizt wird. Diese Beheizung soll jedoch nur weniger als 20 %, typischerweise weniger als 10 % und unter optimalen Bedingungen nur ca. 5 % des Wärmebedarfs des Membranmoduls abdecken. Der überwiegende Teil der zur Erhitzung der Frischluft erforderlichen Wärme wird der Abluft des Membranmoduls durch Wärmetausch entzogen. Dies ist durch Verwendung effizienter Rekuperatoren möglich, also von Hochtemperatur-Wärmetauschern auf Basis hochtemperaturfester Stähle. Alternativ können Regeneratoren mit keramischen Schüttungen oder Wabenstrukturen eingesetzt werden, die abwechselnd durch Frischluft und Abgas durchströmt werden. Auf diese Weise wird der Großteil des erforderlichen Wärmebedarfs unabhängig vom Prozess der Biomassevergasung durch Wärmerückgewinnung aus dem Abgas des Membranmoduls bereitgestellt.

Die direkte Beheizung des Membranmoduls mit dem Synthesegas aus der Biomassevergasung führt zu einer einfachen Anbindung an die Vergasungsanlage und zeichnet sich durch ein sehr schnelles thermisches Ansprechverhalten und ein unkompliziertes Regelverhalten aus. Dadurch kann unabhängig von den verfügbaren Temperaturniveaus des Vergasungsprozesses eine Temperaturanhebung im Membranmodul auf dessen optimale Betriebstemperatur realisiert werden. Die anlagenspezifischen Besonderheiten der Biomassevergasungsanlage spielen bei Verwendung des direkt gasbeheizten Membranmoduls somit nur noch eine untergeordnete Rolle, so dass eine Einbindung an bestehende Anlagen stark vereinfacht wird. Darüber hinaus ist durch die Verbrennung innerhalb des Membranmoduls eine optimale Ausnutzung der zugeführten Energie des Synthesegases gegeben.

Der Angriff der MIEC-Membranen durch korrosive Gasbestandteile, wie CO₂ oder SO₂ wird durch eine konstruktive Gestaltung der Gasströmung weitgehend verhindert bzw. eingeschränkt. Erfindungsgemäß wird die eintretende vorgewärmte Frischluft zunächst innerhalb von Schutzrohren an den darin befindlichen Membranrohren entlang geführt und tritt erst danach in den eigentlichen Verbrennungsraum ein. Die Austrittsöffnung der Schutzrohre wird zu diesem Zweck so bemessen, dass die in den Verbrennungsraum eintretende Frischluft innerhalb der Gasaustrittsöffnung mindestens eine Geschwindigkeit von 0,2 m/s erreicht. Gasförmige Verbrennungsprodukte werden dadurch vom Membranmaterial weitgehend ferngehalten. Die Verbrennung des Synthesegases erfolgt somit räumlich und zeitlich erst nach dem Kontakt der Frischluft mit der Membran, die Verbrennung findet also mit der an Sauerstoff abgereicherten Luft statt. Für den Membrantrennprozess steht somit auf der Feedseite der Membran der unbeeinflusste Sauerstoff-Partialdruck der eintretenden Frischluft und damit die volle Triebkraft zur Verfügung, was zu einer maximalen Sauerstoffproduktionsrate führt. Durch konstruktive Gestaltung der Austrittsöffnung als Düse können je nach den technologischen Erfordernissen sogar der Luftdruck im Schutzrohr und damit die Sauerstoffpermeation weiter erhöht werden, ohne dass dafür ein äußerer Druckkessel erforderlich ist.

Die Triebkraft für den Sauerstofftransport wird erfindungsgemäß durch Erzeugen eines Vakuums innerhalb der Membrankomponenten oder durch Spülen der Membranen mit Wasserdampf erzeugt. Zur Vakuumerzeugung können elektromechanische Vakuumpumpen, mechanische Vakuumpumpen oder Dampfstrahlpumpen eingesetzt werden. Mechanische Vakuumpumpen, z. B. Flüssigkeitsringpumpen, werden vorteilhaft mit dem Gasmotor mechanisch gekoppelt, um die Verluste bei der Umwandlung in elektrische Energie und zurück in die elektromechanische Vakuumerzeugung zu vermeiden. Gegenüber elektromechanischen Pumpen kann so der Eigenenergiebedarf der Sauerstofferzeugung weiter verringert werden. Stehen keine Abnehmer für die überschüssige Wärmeenergie zur Verfügung, so kann die Abwärme zur Dampferzeugung genutzt werden. Der Dampf wiederum kann mittels einer Dampfstrahlpumpe zur Vakuumerzeugung eingesetzt werden, so dass weder elektrische noch mechanische Energie zur Erzeugung der Triebkraft für den Sauerstofftransport erforderlich ist. Dadurch wird erfindungsgemäß eine prozessintegrierte Sauerstofferzeugung ohne Eigenbedarf an elektrischer Energie realisiert, was gegenüber üblichen PSA-Anlagen einen bedeutenden technologischen und wirtschaftlichen Vorteil darstellt.

Bei der Nutzung einer Dampfstrahlpumpe fällt wie bei der Spülung der Membranen mit Wasserdampf Sauerstoff mit hohem Wasserdampfanteil an. Der Wasseranteil des Sauerstoffs kann eingesetzt werden, um die Temperatur in der Vergasungszone zu regulieren, da bei der Vergasung mit reinem Sauerstoff sehr hohe Temperaturen erreicht werden. Eine Einstellung des Dampf zu Sauerstoffverhältnisses ist durch Auskondensation des überschüssigen Wasserdampfes oder Zumischen von Dampf einfach realisierbar.

Insbesondere wird die Aufgabe auch durch die Einbindung eines Membranmoduls mit einem Gehäuse und einer BSCF-Membran in die Biomassevergasung dadurch gelöst, dass das Gehäuse mit einem Eingang für Brenngas oder Synthesegas und einem Ausgang für Abgas im unteren Bereich mit einer Anschlussplatte und einer darüber liegenden Isolierung versehen ist, dass die BSCF-Membran aus einer Vielzahl von oben geschlossenen und unten geöffneten Membranrohren besteht, wobei die unten geöffneten Membranrohre durch die Isolierung hindurch zu einem in der Anschlussplatte befindlichen gemeinsamen Gasabführungsausgang zum Abzug mindestens des gewonnenen Sauerstoffs geführt sind, dass mindestens ein Schutzrohr vorhanden ist, welches über ein oder ein Teil oder alle Membranrohre gestülpt angeordnet ist und im unteren Bereich mindestens mit der Isolierung in Kontakt steht, so dass zwischen Membranrohren und Schutzrohr ein Zwischenraum und zwischen Schutzrohr und Gehäuse ein Verbrennungsraum gebildet sind, wobei in den im unteren Bereich des Zwischenraums Frischluft und in den Verbrennungsraum Brenngas oder Synthesegas zuführbar sind, und dass das Schutzrohr im oberen Bereich eine Austrittsöffnung zum Verbrennungsraum hin aufweist, die derart geöffnet ist, dass die Frischluftgeschwindigkeit an der Austrittsöffnung größer 0,2 m/s ist.

Die Erfindung soll nachstehend anhand von Ausführungsbeispielen näher erläutert werden. In den dazugehörigen Zeichnungen zeigt
- Fig. 1: eine Einbindung eines Membranmoduls in die Biomassevergasung und Möglichkeiten der Sauerstoffnutzung in der Biomassevergasung,
- Fig. 2: eine weitere Einbindungsmöglichkeit eines Membranmoduls in die Biomassevergasung und Möglichkeiten der Sauerstoffnutzung in der Biomassevergasung,
- Fig. 3: eine schematische Darstellung einer möglichen Einbindung der Membranrohre in das direkt beheizte Membranmodul und
- Fig. 4: eine weitere schematische Darstellung einer möglichen Einbindung der Membranrohre in das direkt beheizte Membranmodul.

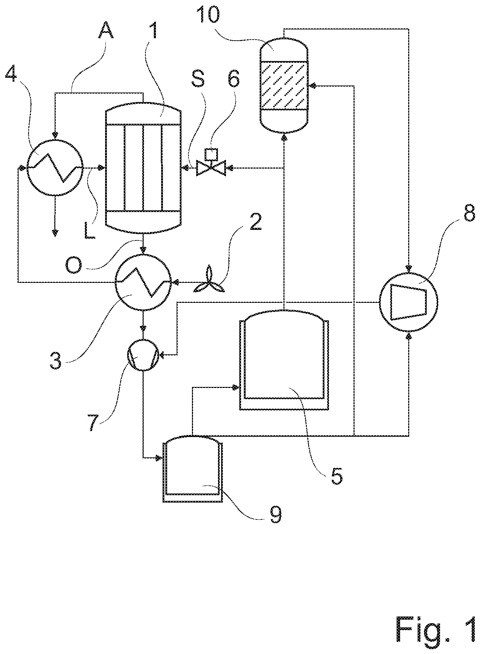

Gemäß Fig. 1 ist eine integrierte Sauerstofferzeugung in der Biomassevergasung durch Vakuumabsaugung eines direkt mit Synthesegas beheizten Sauerstoff-Membranmoduls mit minimiertem elektrischem Energiebedarf mit seinen wesentlichen Bestandteilen dargestellt.

Das Membranmodul 1 zur Sauerstofferzeugung in der Biomassevergasung ist mit 2500 BSCF-Membranrohren (BSCF - Ba_{0,5}Sr_{0,5}Co_{0,8}Fe_{0,2}O_{3-δ}) der Länge 700 mm bestückt. Die einseitig geschlossenen BSCF-Membranrohre besitzen einen Außendurchmesser von 3,2 mm und einen Innendurchmesser von 2,6 mm und sind in eine vakuumdichte Anschlussplatte mit Silikon-Einsteckdichtungen vakuumdicht eingesetzt. Das Membranmodul 1 wird durch einen Radiallüfter oder Seitenkanalverdichter 2 mit Frischluft L versorgt. Die Frischluft L wird zur Kühlung des erzeugten Sauerstoffs O über einen ersten Wärmetauscher 3 geführt und durch das aus dem Membranmodul 1 austretende Abgas A über einen zweiten Wärmetauscher 4 vorgewärmt. Die Zuführung der erforderlichen Restwärme zum Erreichen der Betriebstemperatur erfolgt durch Synthesegas S aus dem Vergaser 5 über ein steuerbares Gasventil 6. Die Absaugung des entstehenden Sauerstoffs erfolgt mit einer Vakuumpumpe 7, die mit dem Gasmotor des BHKW 8 mechanisch gekoppelt ist. Alternativ kann eine elektromechanische Vakuumpumpe oder eine Dampfstrahlpumpe eingesetzt werden. Für die Erzeugung der nachfolgend beschriebenen Sauerstoffflüsse benötigen diese Pumpen ein Saugvermögen von 150 Saug-m³/h. Der Sauerstoff wird in einem Tank 9 zwischengespeichert und steht für die Vergasung im Vergaser 5, für die Gasreinigungsvorrichtung 10 und für die Nutzung im Gasmotor des BHKW 8 zur Verfügung. Bei einer Betriebstemperatur des Membranmoduls 1 von 850 °C, einem Entnahmedruck von 90 mbar auf der Saugseite der Vakuumpumpe 7 und einem Luftdurchsatz von 260 m³ i.N./h erzeugt das Membranmodul 1 13 m³ i.N. O₂ pro Stunde.

Bei Verwendung einer elektromechanischen Vakuumpumpe wird unter Vernachlässigung der thermischen Verluste ein spezifischer Verbrauch an Elektroenergie von 0,22 kWh_{el.}/m³ i.N. O₂ erreicht. Die mechanische Kopplung der Vakuumpumpe 7 mit dem Gasmotor des BHKW 8 benötigt keine elektrische Energie zur Sauerstoff-Erzeugung, allerdings wird dem BHKW mechanische Energie zum Betrieb der Vakuumpumpe 7 entzogen.

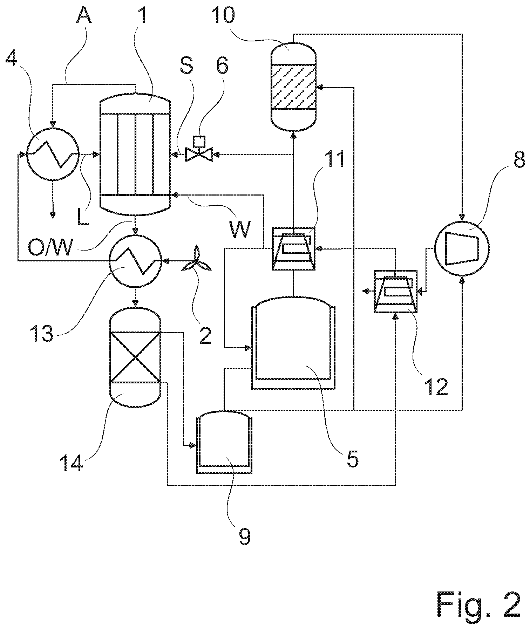

Gemäß Fig. 2 ist ein Verfahrensschema zur Erzeugung von einem Sauerstoff-Dampf-Gemisch mittels eines direkt mit dem Synthesegas S beheizten Sauerstoff-Membranmoduls dargestellt.

Das Membranmodul 1 zur Sauerstofferzeugung in der Biomassevergasung ist mit 1000 BSCF-Membranrohren (BSCF - Ba_{0,5}Sr_{0,5}Co_{0,8}Fe_{0,2}O_{3-δ}) der Länge 700 mm bestückt. In die einseitig geschlossenen Rohre mit einem Außendurchmesser von 10 mm und einen Innendurchmesser von 8 mm wird Wasserdampf aus einem ersten Dampferzeuger 11 über Spüllanzen eingeleitet. Der niedrige Sauerstoffpartialdruck im Wasserdampf führt zur Anreicherung des Wasserdampfes W mit Sauerstoff O. Die BSCF-Membranrohre und Spüllanzen sind in eine vakuumdichte Anschlussplatte mit O-Ring-Quetschverschraubungen eingedichtet. Dem mit heißem Synthesegas S aus dem Vergaser 5 betriebenen ersten Dampferzeuger 11 kann ein zweiter Dampferzeuger 12 vorgelagert sein, der die Abwärme des Gasmotors des BHKW 8 nutzt. Das Membranmodul 1 wird durch den Radiallüfter oder Seitenkanalverdichter 2 mit Frischluft L versorgt. Die Frischluft L wird zur Kühlung des erzeugten Gasgemisches aus Sauerstoff O und Dampf über einen Kondensator 13 geführt. Der dem Kondensator 13 nachgeordnete zweite Wärmetauscher 4 wärmt die durchströmende Frischluft L weiter auf, indem das aus dem Membranmodul 1 austretende Abgas A über den zweiten Wärmetauscher 4 geführt wird. Die Zuführung der erforderlichen Restwärme zum Erreichen der Betriebstemperatur erfolgt durch das Synthesegas S aus dem Vergaser 5 über ein steuerbares Gasventil 6. In dem dem Kondensator 13 nachgeordneten Flüssigkeitsabscheider 14 wird der Sauerstoff O vom Wasser getrennt und dem Tank 9 zugeleitet. Das auskondensierte Wasser im Flüssigkeitsabscheider 14 wird erneut dem ersten Dampferzeuger 11 und zweiten Dampferzeuger 12 zugeführt. Der Sauerstoff O im Tank 9 steht für die Vergasung im Vergaser 5, für die Gasreinigungsvorrichtung 10 und für die Nutzung im Gasmotor des BHKW 8 zur Verfügung, wobei der Wassergehalt des Sauerstoffs O sowohl durch die Temperatur des Kondensators 13 als auch durch die Zumischung von Dampf aus den Dampferzeugern (11, 12) eingestellt werden kann. Bei einer Betriebstemperatur des Membranmoduls 1 von 850 °C und einem Durchsatz von 50 m³ i.N. Dampf pro Stunde bei ca. 1,1 bar bis 1,8 bar Dampfdruck erzeugt das Membranmodul 1 5 m³ i.N. O₂ pro Stunde, ohne elektrische Energie zu verbrauchen.

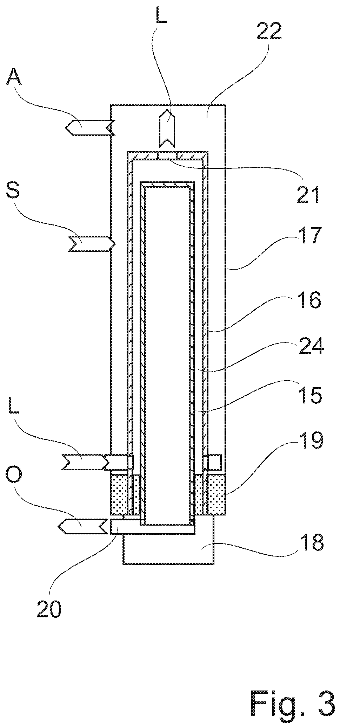

Gemäß Fig. 3 ist der Prinzipaufbau des Membranmoduls 1 gemäß der Ausführung entsprechend den Erläuterungen zu Fig. 1 dargestellt, wobei statt der 2500 BSCF-Membranrohre nur ein einziges Membranrohr 15 dargestellt ist. Als die wesentlichen Bestandteile des Membranmoduls 1 sind somit das Membranrohr 15, das darüber gestülpte Schutzrohr 16 sowie das umschließende Gehäuse 17 mit seiner metallischen Anschlussplatte 18 erkennbar. Die Einleitung der Frischluft L in den Zwischenraum 24 zwischen Membranrohr 15 und Schutzrohr 16 erfolgt im Fußbereich des Schutzrohres 16. Aufgrund der Isolierung 19 kann nur wenig Wärme auf die Anschlussplatte 18 übertragen werden, so dass der Gasabführausgang 20 für den gewonnenen Sauerstoff O des Membranrohrs 15 nicht zusätzlich mit aufgeheizt wird.

Das Schutzrohr 16 verhindert im Betrieb einen direkten Kontakt der Verbrennungsprodukte, indem durch Einstellung des Luftdurchsatzes die Gasgeschwindigkeit an der Austrittsöffnung 21 in den Verbrennungsraum 22 auf über 0,2 m/s gebracht wird. Dadurch kann ein Rückströmen der Verbrennungsgase an das Membranrohr 15 weitgehend vermieden werden.

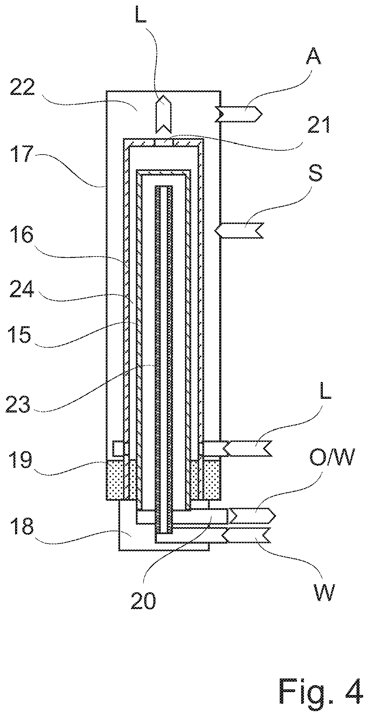

Alternativ zur Ausführung gemäß Fig. 3 ist es auch möglich, mehrere kleinere Austrittsöffnungen 21 im Schutzrohr 16 zu verwenden oder poröse keramische Schutzrohre 16 mit einer offenen Porosität von 8 Vol-% bis 25 Vol-% einzusetzen. Bei höheren Luftdurchsätzen kann direkt ein offenes Schutzrohr 16 ohne Verengung verwendet werden, wenn die entsprechende Gasgeschwindigkeit von mehr als 0,2 m/s eingehalten wird. Auch die Anordnung mehrerer Membranrohre 15 in einem größeren Schutzrohr 16 ist möglich. Fig. 4 zeigt schematisch den Prinzipaufbau des Membranmoduls 1 gemäß der Ausführung entsprechend den Erläuterungen zu Fig. 2, wobei auch hier analog zu den Erläuterungen zu Fig.3 nur ein einziges Membranrohr 15 dargestellt ist. Als die wesentlichen Bestandteile des Membranmoduls 1 sind somit das Membranrohr 15, das darüber gestülpte Schutzrohr 16, das umschließende Gehäuse 17 mit seiner metallischen Anschlussplatte 18 sowie die innenliegende Spüllanze 23 erkennbar. Die Spüllanze 23 ist nur bei Verwendung von Wasserdampf W als Spülgas erforderlich. Wie einfach ersichtlich ist, kann auch eine Rückführung der Abluft ohne Eintritt in den Verbrennungsraum 22 erfolgen, was jedoch eine aufwändigere konstruktive Lösung erfordert. In diesem Fall muss die Verbrennungsluft separat zugeführt werden. Das Management der Gase wird dadurch komplizierter, da dann auch die heiße, sauerstoffverarmte Luft über die Anschlussplatte 18 abgeführt werden muss oder für den Austritt der sauerstoffverarmten Luft weitere Austrittsöffnungen 21 angebracht werden müssen. In diesem Fall ist es sinnvoll, den Frischluft-Abgas-Wärmetauscher in die Anschlussplatte 18 des Membranmoduls 1 zu integrieren.

### Bezugszeichenliste

- 1: Membranmodul
- 2: Radiallüfter oder Seitenkanalverdichter
- 3: erster Wärmetauscher
- 4: zweiter Wärmetauscher
- 5: Vergaser
- 6: steuerbares Gasventil
- 7: Vakuumpumpe
- 8: Gasmotor des BHKW
- 9: Tank
- 10: Gasreinigungsvorrichtung
- 11: erster Dampferzeuger
- 12: zweiter Dampferzeuger
- 13: Kondensator
- 14: Flüssigkeitsabscheider
- 15: Membranrohr
- 16: Schutzrohr
- 17: Gehäuse
- 18: Anschlussplatte
- 19: Isolierung
- 20: Gasabführausgang
- 21: Austrittsöffnung
- 22: Verbrennungsraum
- 23: Spüllanze
- 24: Zwischenraum
- L: Frischluft
- S: Synthesegas
- A: Abgas
- O: Sauerstoff
- W: Wasserdampf

## Patentansprüche

1. Membranmodul (1) mit einem Gehäuse und einer mischleitenden, Sauerstoff-permeablen Membran, **dadurch gekennzeichnet, dass**
- das Gehäuse (17) mit einem Eingang für Brenn- oder Synthesegas (S) und einem Ausgang für Abgas (A) sowie im unteren Bereich mit einer Anschlussplatte (18) und einer darüber liegenden Isolierung (19) versehen ist,
- die mischleitende, Sauerstoff-permeable Membran aus einer Vielzahl von einseitig geschlossenen und auf der anderen Seite geöffneten Membranrohren (15) besteht, wobei das offene Ende der Membranrohre (15) durch die Isolierung (19) hindurch zu einem in der Anschlussplatte (18) befindlichen gemeinsamen Gasabführungsausgang (20) zum Abzug mindestens des gewonnenen Sauerstoffs (O) geführt sind,
- mindestens ein Schutzrohr (16) vorhanden ist, welches über ein oder ein Teil oder alle Membranrohre (15) gestülpt angeordnet ist und auf einer Seite mindestens mit der Isolierung (19) in Kontakt steht, so dass zwischen Membranrohren (15) und Schutzrohr (16) ein Zwischenraum (24) und zwischen Schutzrohr (16) und Gehäuse (17) ein Verbrennungsraum (22) gebildet sind, wobei in den Zwischenraum (24) Frischluft (L) und in den Verbrennungsraum (22) Brenn- oder Synthesegas (S) zuführbar sind, und
- das Schutzrohr (16) eine Austrittsöffnung (21) zum Verbrennungsraum (22) hin aufweist, die derart geöffnet ist, dass die Frischluftgeschwindigkeit an der Austrittsöffnung (21) größer 0,2 m/s ist.

2. Membranmodul nach Anspruch 1, **dadurch gekennzeichnet, dass** innerhalb jedes Membranrohres (15) jeweils zum Spülen mit Wasserdampf (W) eine rohrartige Spüllanze (23) angeordnet ist.

3. Membranmodul nach Anspruch 1 oder 2, **dadurch gekennzeichnet, dass** die mischleitende Membran eine BSCF-Membran ist.

4. Verfahren zur energieeffizienten Sauerstofferzeugung in der Biomassevergasung unter Verwendung eines Membranmoduls (1) gemäß Anspruch 1 bis 3 zur Erzeugung von hochreinem Sauerstoff, **dadurch gekennzeichnet, dass**
- mittels Rekuperatoren oder Regeneratoren die aus dem Membranmodul (1) austretenden Gase zur Erwärmung der eintretenden Frischluft (L) eingesetzt werden, wobei mehr als 50 % der im Abgas (A) enthaltenen Wärmeenergie zur Vorheizung der Frischluft (L) genutzt wird,
- die vorgewärmte eintretende Frischluft (L) in einen Zwischenraum (24) des Membranmoduls (1) an den mischleitenden, Sauerstoff-permeablen Membranen vorbei geleitet wird, so dass Sauerstoff permeiert, der aus dem Membranmodul (1) herausgeführt wird,
- die abgereicherte Frischluft (L) durch eine Austrittsöffnung (21) mit einer Geschwindigkeit größer 0,2 m/s aus den Zwischenraum (24) in einen um den Zwischenraum (24) herum angrenzenden Verbrennungsraum geleitet wird und
- ein aus der Biomassevergasung gewonnenes Brenn- oder Synthesegas (S) zusammen mit der abgereicherten Frischluft (L) im Verbrennungsraum (22) des Membranmoduls (1) verbrannt wird, sodass das zur weiteren Verwendung vorgesehene Abgas (A) entsteht und gleichzeitig die entstehende Wärme in den Zwischenraum (24) gelangt und dort die mischleitenden, Sauerstoff-permeablen Membranen auf das erforderliche Temperaturniveau von 800 bis 900 °C aufheizt..

5. Verfahren nach Anspruch 4, **dadurch gekennzeichnet, dass** ein Vakuum innerhalb der mischleitenden Membranen durch elektromechanische oder mechanische Vakuumpumpen (7) oder durch Dampfstrahlpumpen erzeugt wird.

6. Verfahren nach den Ansprüchen 4 und 5, **dadurch gekennzeichnet, dass** das Brenn- oder Synthesegas (S) aus der Biomassevergasung in einen Gasmotor eines BHKW (8) eingespeist wird und die mechanische Vakuumpumpe (7) mit dem Gasmotor (8) mechanisch gekoppelt wird.

## Claims

1. A membrane module (1) comprising a housing and a mixed-conduction, oxygen-permeable membrane, **characterized in that**
- the housing (17) is provided with an inlet for combustion gas or synthesis gas (S) and an outlet for exhaust gas (A) and, in the lower region, with a connecting plate (18) and an insulation (19) arranged above it,
- the mixed-conduction, oxygen-permeable membrane consists of a plurality of membrane tubes (15) closed on one side and open on the other side, the open end of the membrane tubes (15) being guided through the insulation (19) to a common gas discharge outlet (20) arranged in the connecting plate (18) for the discharge of at least the oxygen (O) obtained,
- at least one protective tube (16) is present, which is placed over one or a part or all of the membrane tubes (15) and is in contact on one side at least with the insulation (19), so that an intermediate space (24) is formed between the membrane tubes (15) and the protective tube (16) and a combustion space (22) is formed between the protective tube (16) and the housing (17), wherein fresh air (L) can be fed into the intermediate space (24) and combustion gas or synthesis gas (S) can be fed into the combustion space (22), and
- the protective tube (16) has an outlet opening (21) towards the combustion space (22), which is opened in such a way that the fresh air velocity at the outlet opening (21) is greater than 0.2 m/s.

2. The membrane module according to claim 1, **characterized in that** a tubular flushing lance (23) is arranged inside each membrane tube (15) for flushing with water vapour (W).

3. The membrane module according to claim 1 or 2, **characterized in that** the mixed-conduction membrane is a BSCF membrane.

4. A method for energy-efficient oxygen generation in biomass gasification using a membrane module (1) according to claims 1 to 3 to generate high-purity oxygen, **characterized in that**
- the gases emanating from the membrane module (1) are used to heat the incoming fresh air (L) by means of recuperators or regenerators, wherein more than 50 % of the thermal energy contained in the exhaust gas (A) is used to preheat the fresh air (L),
- the preheated incoming fresh air (L) is conducted into an intermediate space (24) of the membrane module (1) past the mixed-conduction, oxygen-permeable membranes, so that oxygen permeates, which is conducted out of the membrane module (1),
- the depleted fresh air (L) is conducted through an outlet opening (21) at a velocity greater than 0.2 m/s from the intermediate space (24) into a combustion space adjacent to the intermediate space (24), and
- a combustion gas or synthesis gas (S) obtained from biomass gasification is burned together with the depleted fresh air (L) in the combustion space (22) of the membrane module (1) so that the exhaust gas (A) intended for further use is produced and, at the same time, the heat produced reaches the intermediate space (24) where it heats the mixed-conduction, oxygen-permeable membranes to the required temperature level of 800 to 900 °C.

5. The method according to claim 4, **characterized in that** a vacuum is generated within the mixed-conduction membranes by electromechanical or mechanical vacuum pumps (7) or by steam jet pumps.

6. The method according to claims 4 and 5, **characterized in that** the combustion gas or synthesis gas (S) from biomass gasification is fed into a gas engine of a CHP (8) and the mechanical vacuum pump (7) is mechanically coupled to the gas engine (8).

## Revendications

1. Module membranaire (1) comprenant un boîtier et une membrane à conduction mixte et perméable à l'oxygène, **caractérisé**
- **en ce que** le boîtier (17) compend une entrée de gaz de combustion ou de synthèse (S) et une sortie de gaz d'échappement (A) et, dans la partie inférieure, une plaque de raccordement (18) et une isolation (19) située au-dessus,
- **en ce que** la membrane à conduction mixte et perméable à l'oxygène est constituée d'une pluralité de tubes à membrane (15) fermés d'un côté et ouverts de l'autre côté, l'extrémité ouverte des tubes à membrane (15) étant conduite à travers l'isolation (19) vers une sortie commune d'échappement de gaz (20) située dans la plaque de raccordement (18) pour l'échappement d'au moins l'oxygène (O) obtenu,
- **en ce qu'**il y a au moins un tube de protection (16) qui est mis sur un ou une partie ou la totalité des tubes à membrane (15) et qui est en contact d'un côté au moins avec l'isolation (19), de sorte qu'un espace intermédiaire (24) est formé entre les tubes à membrane (15) et le tube de protection (16) et qu'un espace de combustion (22) est formé entre le tube de protection (16) et le boîtier (17), de l'air frais (L) pouvant être introduit dans l'espace intermédiaire (24) et du gaz de combustion ou de synthèse (S) pouvant être introduit dans l'espace de combustion (22), et
- le tube de protection (16) présente une ouverture de sortie (21) vers l'espace de combustion (22), qui est ouverte de telle manière que la vitesse de l'air frais à l'ouverture de sortie (21) est supérieure à 0,2 m/s.

2. Module membranaire selon la revendication 1, **caractérisé en ce qu'**une lance de rinçage tubulaire (23) est disposée à l'intérieur de chaque tube à membrane (15) pour le rinçage à la vapeur (W).

3. Module membranaire selon la revendication 1 ou 2, **caractérisé en ce que** la membrane à conduction mixte est une membrane BSCF.

4. Procédé de production d'oxygène éco-énergétique dans la gazéification de la biomasse en utilisant un module membranaire (1) selon les revendications 1 à 3 pour la production d'oxygène de haute pureté, caractérisé en ce
- les gaz sortant du module membranaire (1) sont utilisés pour chauffer, au moyen de récupérateurs ou de régénérateurs, l'air frais entrant (L), plus de 50 % de l'énergie thermique contenue dans le gaz d'échappement (A) étant utilisée pour préchauffer l'air frais (L),
- l'air frais entrant préchauffé (L) est conduit dans un espace intermédiaire (24) du module membranaire (1) en passant par les membranes à conduction mixte et perméables à l'oxygène, permettant la perméation d'oxygène qui est conduit hors du module à membrane (1),
- l'air frais appauvri (L) est conduit à travers une ouverture de sortie (21) à une vitesse supérieure à 0,2 m/s depuis l'espace intermédiaire (24) dans un espace de combustion adjacente à l'espace intermédiaire (24), et
- un gaz de combustion ou de synthèse (S) obtenu par la gazéification de la biomasse est brûlé dans l'espace de combustion (22) du module membranaire (1) avec l'air frais (L) obtenu, de sorte que le gaz d'échappement (A) destiné à une utilisation ultérieure est produit et que la chaleur produite atteint en même temps l'espace intermédiaire (24), où elle chauffe les membranes à conduction mixte et perméables à l'oxygène au niveau de température requis de 800 à 900 °C.

5. Procédé selon la revendication 4, **caractérisé en ce qu'**un vide est généré à l'intérieur des membranes à conduction mixte par des pompes à vide électromécaniques ou mécaniques (7) ou par des pompes à jet de vapeur.

6. Procédé selon les revendications 4 et 5, **caractérisé en ce que** le gaz de combustion ou de synthèse (S) provenant de la gazéification de la biomasse est introduit dans un moteur à gaz d'une centrale de cogénération (8) et la pompe à vide mécanique (7) est couplée mécaniquement au moteur à gaz (8).
